(19) Europäisches Patentamt

European Patent Office

Office européen des brevets

(11) Veröffentlichungsnummer: **0 265 837 B1**

(12) **EUROPÄISCHE PATENTSCHRIFT**

(45) Veröffentlichungstag der Patentschrift: **20.05.92**

(21) Anmeldenummer: **87115471.2**

(22) Anmeldetag: **22.10.87**

(51) Int. Cl.⁵: **H04M 3/24**, H04Q 11/04, H04Q 3/52

(54) **Schaltungsanordnung, deren Verwendung und Prüfverfahren für ein Nachrichtennetzwerk.**

(30) Priorität: **25.10.86 DE 3636427**

(43) Veröffentlichungstag der Anmeldung:
**04.05.88 Patentblatt 88/18**

(45) Bekanntmachung des Hinweises auf die
Patenterteilung:
**20.05.92 Patentblatt 92/21**

(84) Benannte Vertragsstaaten:
**AT BE CH DE ES FR GB IT LI NL SE**

(56) Entgegenhaltungen:
DE-A- 2 523 912
US-A- 4 577 312

**PATENT ABSTRACTS OF JAPAN, Band 10,
Nr. 54 (E-385)[2111], 4. März 1986; & JP-A-60
208 124**

(73) Patentinhaber: **Standard Elektrik Lorenz Aktiengesellschaft
Lorenzstrasse 10
W-7000 Stuttgart 40(DE)**

(84) Benannte Vertragsstaaten:
**DE**

(73) Patentinhaber: **ALCATEL N.V.
Strawinskylaan 537 (World Trade Center)
NL-1077 XX Amsterdam(NL)**

(84) Benannte Vertragsstaaten:
**BE CH ES FR GB IT LI NL SE AT**

(72) Erfinder: **Kaltbeitzel, Günter
Hermann-Essig-Strasse 87
W-7141 Schwieberdingen(DE)**
Erfinder: **Klein, Michael, Dr.
Grabenstrasse 39
W-8501 Rückersdorf(DE)**
Erfinder: **Renner, Martin
Goldberger Strasse 88
W-4020 Mettmann(DE)**
Erfinder: **Wölk, Joachim
Neckarblick 59
W-7122 Besigheim(DE)**

(74) Vertreter: **Brose, Gerhard et al
Standard Elektrik Lorenz AG Patent- und Lizenzwesen Postfach 30 09 29
W-7000 Stuttgart 30(DE)**

## Beschreibung

Die Erfindung betrifft eine Schaltungsanordnung nach dem Oberbegriff des Anspruchs 1, deren Verwendung in einem Nachrichtennetzwerk und ein Verfahren zum Überprüfen eines solchen Nachrichtennetzwerks.

Eine Schaltungsanordnung, die die im Oberbegriff des Anspruchs 1 genannten Merkmale aufweist, ist aus der Veröffentlichung EP-A-0 123 243 des Europäischen Patentamts bekannt. Bei dieser bekannten Anordnung ist es möglich, über einen Signaleingang von außen ein Testsignal über den normalen Signalweg einzuspeisen. Dieses Testsignal wird dann unmittelbar hinter dem Signaleingang abgegriffen und kann dann unter Umgehung eines Teils des Signalwegs über Umschalter (Multiplexer) an anderer Stelle wieder in den Signalweg eingespeist werden. Soll eine solche Anordnung während des Betriebs in regelmäßigen Abständen überprüft werden, so muß sie dazu entweder regelmäßig ausgebaut und mit einem Meßplatz verbunden werden oder, wie dies beispielsweise in Vermittlungseinrichtungen üblich ist, über ohnehin vorhandene Signalwege mit einem Meßplatz verbunden werden. Zum einen sind dann vom und zum Meßplatz zwei zusätzliche Verbindungen erforderlich, die eine zusätzliche Verkehrsbelastung darstellen, zum anderen gehen Fehler auf diesen zusätzlichen Wegen voll in die Fehlermessung ein. Bei diesen bekannten Anordnungen können nur wenige Überprüfungen gleichzeitig erfolgen; Langzeitmessungen sind deshalb kaum möglich.

Aus der DE-OS 33 31 403 ist es bekannt, in elektronischen Geräten komplette Prüfeinrichtungen einzubauen, die dann das Gerät auf Anforderung überprüfen und die Ergebnisse der Prüfung zugänglich machen. Grundsätzlich ist es nun möglich, beispielsweise in einer Vermittlungsstelle, alle oder eine Vielzahl von Baugruppen mit solchen Prüfeinrichtungen auszurüsten. Bei hoch integrierten Baugruppen stünde dem der zusätzliche Aufwand kaum entgegen. Auch der zur Durchführung einer Überprüfung erforderliche Informationsaustausch mit der Umgebung wäre durchaus akzeptabel, da nur die Überprüfung eingeleitet und später das Ergebnis wieder abgefragt werden müßte. Für baugruppenübergreifende Überprüfungen sind diese integrierten Prüfeinrichtungen jedoch nicht geeignet, hierfür sind zusätzliche Prüfeinrichtungen erforderlich.

Aus den Patent Abstracts of Japan, Band 10, Nr. 54, (E-385) [2111], 4. März 1986, JP-A-60 208 124 ist ein Line Connection Confirming System bekannt. Jede Vermittlungsstelle eines Nachrichtennetzes weist einen Pilotsignalsender und einen Pilotsignalempfänger auf. Der Pilotsignalsender einer jeden Vermittlungsstelle sendet ein für die jeweilige Vermittlungsstelle individuelles Signal über alle zu anderen Vermittlungsstellen laufenden Verbindungen. Mittels der Pilotsignalempfänger kann jede Vermittlungsstelle feststellen, ob von ihr abgehende Verbindungen tatsächlich zur gewünschten Vermittlungsstelle hin zustande gekommen sind. Durch derartige Quittierungssignale sind in sehr begrenztem Umfang auch netzweite Überprüfungen möglich. Eine Eignung für die Überprüfung einzelner Vermittlungsstellen ist damit ebensowenig gegeben wie die Möglichkeit zur Durchführung quantitativer Messungen.

Aus der DE-A-25 23 912 ist ein Prüfsystem zur Überprüfung des Schaltzustandes von Koppelpunkten eines Kreuzschaltfeldes bekannt das ebenfalls mit Pilotsignalen arbeitet. Wie bei Pilotsignalen üblich, wird auch hier das Pilotsignal zusätzlich zum Nutzsignal über den zu prüfenden Signalweg übertragen und es wird unterstellt, daß Nutzsignal und Pilotsignal durch eine Störung des Signalwegs in gleicher Weise beeinflußt werden. Nutzsignal und Pilotsignal müssen aber grundsätzlich verschiedene charakteristische Eigenschaften aufweisen, um sich nicht gegenseitig zu stören und am Ende des Signalwegs wieder voneinander getrennt werden zu können. Bei analogen Systemen liegt das Pilotsignal deshalb meist frequenzmäßig außerhalb des Nutzsignalbandes. Um Übersteuerungen zu verhindern, ist die Amplitude des Pilotsignals meist deutlich geringer als die des Nutzsignals. Gezielte quantitative Messungen sind damit nicht möglich. Bei digital arbeitenden Systemen sind Pilotsignale in diesem Sinne nicht anwendbar.

Die letztgenannte Schrift schlägt zwar noch vor, als Prüfsignal das Nutzsignal selbst zu verwenden, im gezeigten Beispiel ist dies aber erkennbar nicht möglich.

Hier schafft die Erfindung Abhilfe durch eine Schaltungsanordnung nach der Lehre des Anspruchs 1. Vorteilhafte Ausgestaltungen sind den Ansprüchen 2 bis 4 zu entnehmen. Eine Verwendung einer erfindungsgemäßen Schaltungsanordnung in einem Nachrichtennetzwerk ist in Anspruch 5 gekennzeichnet. Ein solches Nachrichtennetzwerk kann durch ein Verfahren nach Anspruch 6 überprüft werden.

Eine erfindungsgemäße Schaltungsanordnung zeichnet sich dadurch aus, daß sie einen fest eingebauten Testsignalgenerator und eine davon unabhängige, ebenfalls fest eingebaute Fehlererkennungsschaltung aufweist. Von außen kann veranlaßt werden, daß ein Signalweg an einer bestimmten Stelle aufgetrennt und dort das Signal des Testsignalgenerators eingespeist wird. Das an einer anderen, ebenfalls von außen wählbaren Stelle des Signalwegs abgenommene Signal wird in der Fehlererkennungsschaltung überprüft; das Ergebnis wird nach außen gegeben.

Eine solche Schaltungsanordnung wird vorteilhaft dort eingesetzt, wo eine Vielzahl gleicher Schaltungsanordnungen zu einem größeren Nachrichtennetzwerk vereinigt ist. Die Erfindung wird beschrieben am Beispiel eines aus vielen Breitbandkoppelfeldbausteinen aufgebauten Breitbandkoppelfelds. Da die Testsignalgeneratoren und die Fehlererkennungsschaltungen voneinander unabhängig sind, sind damit auch Systemtests möglich, ohne daß zusätzliche Prüfwege geschaltet werden müssen.

Das Testsignal weist die gleichen charakteristischen Eigenschaften auf wie das Nutzsignal. Beim unten beispielhaft beschriebenen digitalen Breitbandkoppelfeldbaustein ist dies eine binäre Signalfolge mit derselben Taktfrequenz, mit der auch der Breitbandkoppelfeldbaustein betrieben wird. Zusammen mit der weitgehenden Zugänglichkeit von außen (Steuereingang, Datenausgang) sind damit die vielfältigsten qualitativen und quantitativen Überprüfungen möglich.

Die vorgeschlagene Schaltungsanordnung erleichtert auch den Test hochintegrierter Schaltungen bereits auf dem Wafer, da keine hochfrequenten Testsignale zugeführt und abgegriffen werden müssen.

Im folgenden wird die Erfindung anhand von Ausführungsbeispielen unter Zuhilfenahme der beiliegenden Zeichnung weiter erläutert.

Fig. 1     zeigt ein Blockschaltbild einer erfindungsgemäßen Schaltungsanordnung.

Fig. 2     zeigt das Blockschaltbild eines Breitbandkoppelfeldbausteins, der als erfindungsgemäße Schaltungsanordnung ausgestaltet ist.

Fig. 3     zeigt eine aus mehreren Breitbandkoppelfeldbausteinen nach Fig. 2 aufgebaute Breitbandkoppelfeldbaugruppe als Beispiel eines erfindungsgemäßen Nachrichtennetzwerks.

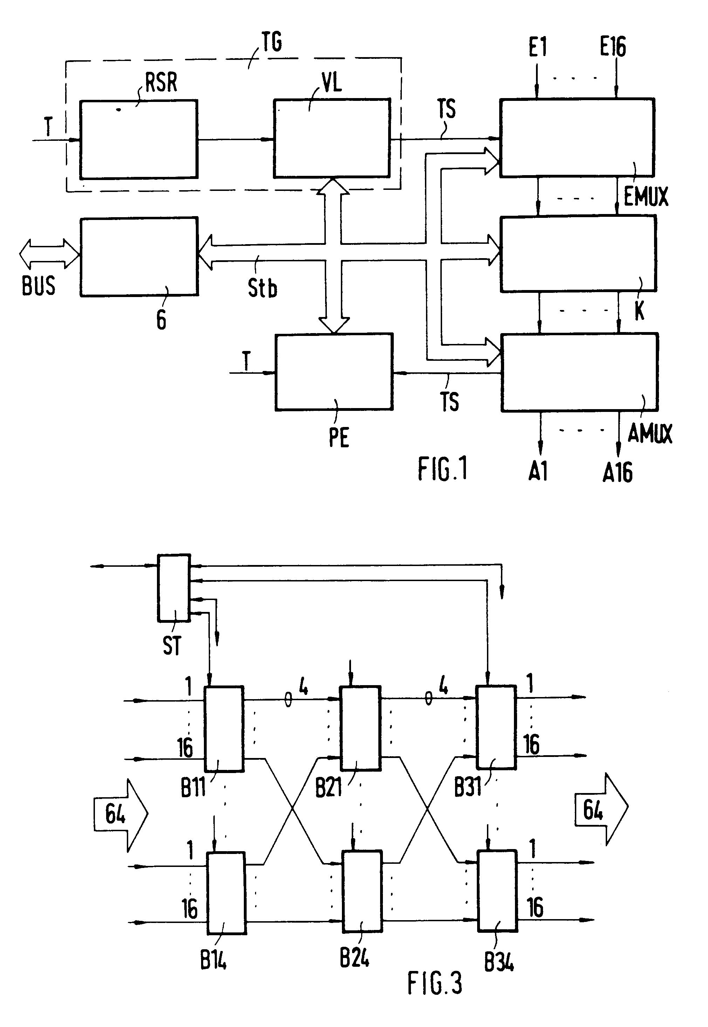

Anhand der Fig. 1 wird nun der grundsätzliche Aufbau einer erfindungsgemäßen Schaltungsanordnung beschrieben. Gezeigt ist ein Ausschnitt aus einem Breitbandkoppelfeldbaustein, der 16 Signaleingänge E1...E16 mittels einer Koppelmatrix K wahlweise mit 16 Signalausgängen A1...A16 verbinden kann. Die Koppelmatrix K wird hierzu über einen internen Steuerdatenbus Stb von einer Decodier- und Steuereinrichtung 6 angesteuert. Die Decodier- und Steuereinrichtung 6 ist zu diesem Zweck über einen Steuereingang mit äußeren Steuereinrichtungen verbunden. Der Steuereingang ist hier als Eingang für einen Steuerdatenbus BUS ausgeführt. Der Steuereingang ist hier gleichzeitig Datenausgang, über den verschiedene Betriebsparameter ausgegeben werden können, beispielsweise die jeweils aktuelle Beschaltung der Koppelpunkte in der Koppelmatrix K. Zwischen die Signaleingänge E1...E16 und die Koppelmatrix K ist ein Eingangsmultiplexer EMUX eingefügt. In gleicher Weise ist zwischen die Koppelmatrix K und die Signalausgänge A1...A16 ein Ausgangsmultiplexer AMUX eingefügt. Eingangsmultiplexer EMUX und Ausgangsmultiplexer AMUX werden über den Steuerdatenbus Stb von der Decodier- und Steuereinrichtung 6 angesteuert.

Der Eingangsmultiplexer EMUX wirkt als Umschalter und erlaubt es, jeden von einem der Signaleingänge E1...E16 kommenden Signalweg aufzutrennen und in den aufgetrennten Signalweg ein Testsignal TS einzuspeisen. Der Ausgangsmultiplexer AMUX ermöglicht den wahlweisen Zugriff zu einem der 16 zu den Signalausgängen A1...A16 führenden Signalwege. Eine Unterbrechung eines Signalwegs im Ausgangsmultiplexer AMUX ist dabei nicht erforderlich.

Die Schaltungsanordnung nach Fig. 1 weist nun weiter einen Testsignalgenerator TG und einen Prüfempfänger PE auf. Das Testsignal TS wird im Testsignalgenerator TG mittels eines rückgekoppelten Schieberegisters RSR als binäre Pseudozufallsfolge erzeugt und in einer schaltbaren Verzögerungsleitung VL in der Phase verändert. Die Verzögerungsleitung VL wird von der Decodier- und Steuereinrichtung 6 über den Steuerdatenbus Stb angesteuert. Dem Testsignalgenerator TG und damit dem rückgekoppelten Schieberegister RSR wird ein Systemtakt T zugeführt. Dadurch, daß die Phase des Testsignals TS in der schaltbaren Verzögerungsleitung VL gegenüber dem Systemtakt T gezielt verändert werden kann, kann das Verhalten der Schaltungsanordnung bei phasenfehlerhaften Eingangssignalen simuliert werden.

Der Aufbau des Prüfempfängers PE ist in der Zeichnung nicht näher dargestellt. Dem Fachmann ist geläufig, wie ein in einem rückgekoppelten Schieberegister erzeugtes Quasizufallssignal festgestellt werden kann. Ein Schieberegister, das in der gleichen Weise beschaltet ist wie das rückgekoppelte Schieberegister RSR, bei dem jedoch die Rückkopplung aufgetrennt ist und bei dem das rückgekoppelte Signal mit dem Eingangssignal verglichen wird, erfüllt auf einfache Weise diesen Zweck. Auch wenn der Testsignalgenerator TG ständig durchläuft und der Prüfempfänger PE zu einem beliebigen Zeitpunkt mit dem Testsignal TS beaufschlagt wird, so wird doch das Signal am Eingang des Schieberegisters im Prüfempfänger PE und das durch Rückkopplung erreichte Signal bei Taktung des Schieberegisters mit dem Systemtakt T spätestens nach Durchlauf eines Bits durch das ganze Schieberegister identisch sein, sofern das Testsignal TS fehlerfrei zum Prüfempfänger PE gelangt. Der Prüfempfänger PE kann so aufgebaut sein, daß nur (nach dem Durchlauf des ersten Bits) festgestellt wird, ob überhaupt ein Fehler auftritt oder er kann beliebig ausgebaut werden mit Zählern zur Einstellung einer bestimmten Torzeit oder zum Zählen der aufgetretenen Fehler bis hin zu Einrichtungen zum Auswerten der aufgetretenen Fehler, beispielsweise zum Aufstellen einer Statistik über die Fehlerverteilung. Die Vorgaben über die Art der durchzuführenden Messungen, insbesondere die gewünschte Torzeit sowie die Abfrage der Meßergebnisse, erfolgen von der Decodier- und Steuereinrichtung 6 aus über den Steuerdatenbus Stb.

Anstelle des hier beschriebenen Zugriffs auf eine Vielzahl verschiedener Signalwege könnte ebenso auch der Zugriff auf verschiedene Stellen ein und desselben Signalwegs treten. Weiter könnte, wenn kein Systemtakt vorhanden ist, der für die Überprüfung mitverwendet werden kann, im Testsignalgenerator TG selbst ein, möglicherweise in der Frequenz wählbarer, Takt erzeugt werden. Im Prüfempfänger PE könnte der Takt auch in bekannter Weise aus dem Signal selbst gewonnen werden.

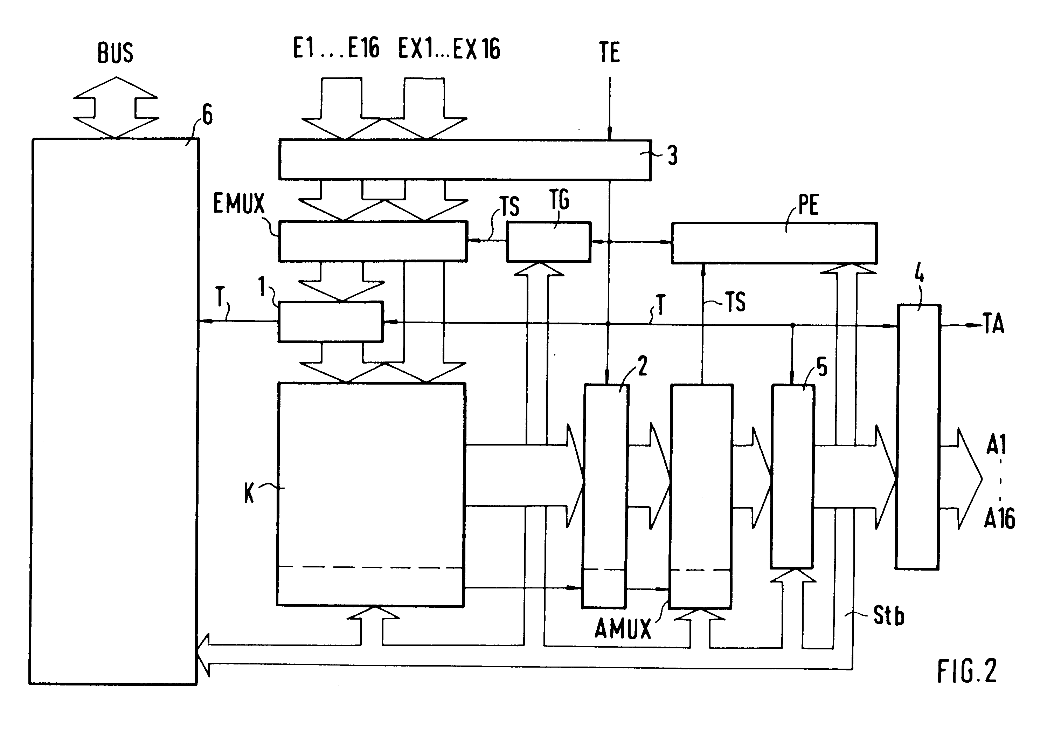

Fig. 2 zeigt das komplette Blockschaltbild eines Breitbandkoppelfeldbausteins. Dieser Baustein weist zum einen die bereits anhand der Fig. 1 beschriebenen Elemente auf. Weiter sind eine Eingangssynchronisationseinrichtung 1, eine Ausgangssynchronisationseinrichtung 2, ein Eingangstrennverstärker 3 , ein Ausgangstrennverstärker 4 und eine Überwachungseinrichtung 5 vorhanden. Jedem der Signalausgänge A1...A16 ist außerdem ein Erweiterungseingang EX1...EX16 zugeordnet, wodurch eine Kaskadierung der Koppelfeldbausteine möglich wird. Der Systemtakt T wird über einen Takteingang TE zugeführt und über einen Taktausgang TA weitergegeben. Weiter weist die Koppelmatrix K einen zusätzlichen Ausgang auf, der bis zum Ausgangsmultiplexer AMUX geführt ist und eine zusätzliche Prüfmöglichkeit schafft. Durch die im Testsignalgenerator TG enthaltene schaltbare Verzögerungsleitung VL ist hier vor allem eine wirkungsvolle Überprüfung der Synchronisationseinrichtungen 1 und 2 möglich. Die Überwachungseinrichtung 5 ist vorgesehen, um im laufenden Betrieb festzustellen, ob überhaupt ein Signal übertragen wird. Die Richtigkeit kann dabei nicht überprüft werden.

Ein solcher Breitbandkoppelfeldbaustein kann mit einfachen Mitteln schon sehr weitgehend auf seine Funktion überprüft werden, ohne daß aufwendige Zusatzeinrichtungen erforderlich sind, insbesondere ohne daß eine Vielzahl hochfrequenter Eingangssignale zugeführt und eine Vielzahl hochfrequenter Ausgangssignale abgegriffen werden müssen. Erst dadurch ist es überhaupt mit vertretbarem Aufwand möglich, einen solchen in hochintegrierter Bauweise hergestellten Breitbandkoppelfeldbaustein vor der weiteren Verarbeitung bereits auf dem Wafer zu prüfen. Dies wäre zwar auch schon mit einer Prüfeinrichtung möglich, wie sie eingangs anhand des Vergleichs mit der DE-OS 33 31 403 beschrieben wurde. Die erfindungsgemäße Schaltungsanordnung bietet darüberhinaus aber noch die Möglichkeit, auf einfache Weise systemweite Überprüfungen durchzuführen. Dies wird nun anhand der Fig. 3 beschrieben.

Fig. 3 zeigt eine Breitbandkoppelfeldbaugruppe, die Teil eines großen Breitbandkoppelfelds ist und die sich wiederum aus einzelnen Breitbandkoppelfeldbausteinen B11...B34 zusammensetzt. Eine solche Breitbandkoppelfeldbaugruppe weist 64 Breitbandsignaleingänge und 64 Breitbandsignalausgänge auf. Schon innerhalb dieser Baugruppe ist eine Vielzahl verschiedener Signalwege möglich. Wenn jeder dieser Breitbandkoppelfeldbausteine B11...B34 wie in Fig. 2 ausgebildet ist, d.h. einen Testsignalgenerator TG und einen davon unabhängigen Prüfempfänger PE aufweist, dann ist es möglich, am Eingang eines beliebigen Signalwegs ein Testsignal anzulegen und dieses Testsignal am Ausgang dieses Signalwegs, in der Regel also in einem anderen Breitbandkoppelfeldbaustein, wieder abzugreifen und zu überprüfen. Auch die Überprüfung von Signalwegen über mehrere Baugruppen hinweg ist möglich. Selbst die Überprüfung der Signalwege zu angeschlossenen Teilnehmern oder zu fernen Vermittlungen ist möglich, wenn dort entweder gleichartige Prüfempfänger vorhanden sind oder wenn die Möglichkeit besteht, ferngesteuert dort eine Schleife zu einem Signalweg in der Gegenrichtung aufzubauen. Solche Möglichkeiten werden in der Zukunft ohnehin wohl allgemein üblich sein. So kann beispielsweise von einem beliebigen Testsignalgenerator innerhalb eines Breitbandkoppelfelds eine Verbindung zu einem Bildfernsprechgerät eines Teilnehmers und von diesem wieder zurück zu einem beliebigen Prüfempfänger innerhalb des Breitbandkoppelfelds aufgebaut und überprüft werden. Hierzu ist nun nur noch erforderlich, und dies ist in der Regel ohnehin zu anderen Zwecken erfüllt, daß die einzelnen Breitbandkoppelfeldbausteine mit einer zentralen Steuereinrichtung oder mit untereinander in Verbindung stehenden dezentralen Steuereinrichtungen ST in Verbindung stehen.

Mit verhältnismäßig geringem Aufwand sind damit vielfältige Prüfmöglichkeiten gegeben, die insbesondere bei Breitbandkoppelfeldern und Breitbandkoppelfeldbausteinen auf andere Weise kaum zu realisieren sind.

**Patentansprüche**

1. Schaltungsanordnung mit einem Signaleingang (E1...E16), einem Signalausgang (A1...A16) und einem Signalweg von Signaleingang (E1...E16) zu Signalausgang (A1...A16) für ein Nutzsignal, mit einem Umschalter (EMUX), der es erlaubt, den Signalweg zu unterbrechen und statt des Nutzsignals in dessen weiterer Verlauf ein Testsignal (TS) einzuspeisen, mit einem Steuereingang (BUS) zur Eingabe von Steuerdaten von außerhalb der Schaltungsanordnung zur Steuerung des Umschalters (EMUX) und mit einem Datenausgang (BUS) zur Ausgabe von Betriebsparametern nach außerhalb der Schaltungsanordnung,

**dadurch gekennzeichnet,** daß ein Testsignalgenerator (TG) zum Einspeisen des Testsignals (TS) über den Umschalter (EMUX) enthalten ist, daß das vom Testsignalgenerator (TG) erzeugte Testsignal (TS) durch die gleichen charakteristischen Eigenschaften gekennzeichnet ist wie das Nutzsignal, daß eine Fehlererkennungsschaltung (PE) enthalten ist, mit der ein Testsignal (TS) auf Übertragungsfehler überprüfbar ist, daß an mindestens einer Stelle des Signalwegs das Signal zur Überprüfung zugänglich ist und daß Fehlermeldungen nach außerhalb der Schaltungsanordnung über den Datenausgang (BUS) möglich sind.

2. Schaltungsanordnung nach Anspruch 1, dadurch gekennzeichnet, daß der Testsignalgenerator (TG) eine Vorrichtung (VL) enthält, um die Phase des Testsignals gegenüber einem Systemtakt (T) einstellbar zu machen, und daß die Vorrichtung (VL) über den Steuereingang (BUS) einstellbar ist.

3. Schaltungsanordnung nach Anspruch 2, dadurch gekennzeichnet, daß die Vorrichtung (VL) zur Einstellung der Phase eine schaltbare Verzögerungsleitung ist.

4. Schaltungsanordnung nach einem der Ansprüche 1 bis 3, dadurch gekennzeichnet, daß mehrere Stellen des Signalwegs oder mehrere Signalwege für den Testsignalgenerator (TG) durch Umschalter (EMUX) erreichbar sind und daß der Fehlererkennungsschaltung (PE) mehrere Stellen des Signalwegs oder mehrere Signalwege zugänglich sind.

5. Verwendung der Schaltungsanordnung nach einem der Ansprüche 1 bis 4 in einem Nachrichtennetzwerk mit einer Mehrzahl von Einrichtungen (B11...B34), die durch wählbare Signalwege miteinander verbunden sind oder der Herstellung solcher Signalwege dienen, in dem mindestens einige der Einrichtungen (B11...B34) als Schaltungsanordnungen nach einem der Ansprüche 1 bis 4 ausgebildet sind und in dem eine Steuereinrichtung (ST) vorhanden ist, die mit diesen Einrichtungen (B11...B34) über Steuerleitungen verbunden ist.

6. Verfahren zum Überprüfen eines Nachrichtennetzwerks, in dem mindestens einige der Einrichtungen (B11...B34) als Schaltungsanordnungen nach einem der Ansprüche 1 bis 4 ausgebildet sind und in dem eine Steuereinrichtung (ST) vorhanden ist, die mit diesen Einrichtungen (B11...B34) über Steuerleitungen verbunden ist,

**dadurch gekennzeichnet,** daß von einer ersten Einrichtung (B11...B14), die als Schaltungsanordnung nach einem der Ansprüche 1 bis 4 ausgebildet ist, ein zu prüfender Signalweg geschaltet wird zu einer zweiten Einrichtung (B31...B34), die als Schaltungsanordnung nach einem der Ansprüche 1 bis 4 ausgebildet ist, daß der Testsignalgenerator (TG) der ersten Einrichtung (B11..B14) veranlaßt wird, in diesen Signalweg ein Testsignal einzuspeisen und daß die Fehlererkennungsschaltung (PE) der zweiten Einrichtung (B31...B34) veranlaßt wird, das Signal auf diesem Signalweg zu überprüfen.

## Claims

1. A circuit arrangement comprising a signal input (E1...E16), a signal output (A1...A16), a signal path from the signal input (E1...E16) to the signal output (A1...A16) for a useful signal, a selector switch (EMUX) for allowing the signal path to be opened and a test signal (TS) to be injected instead of the useful signal into the subsequent portion of the signal path, a control input (BUS) for inputting control data to control the selector switch (EMUX), and a data output (BUS) for outputting operating parameters,

**characterized in** that it includes a test-signal generator (TG) for injecting the test signal (TS) through the selector switch (EMUX), that the test signal (TS) generated by the test-signal generation (TG) has the same characteristics as the useful signal, that the circuit arrangement includes an error-detection circuit (PE) with which a test signal (TS) can be checked for transmission errors, that the signal is accessible for testing purposes at at least one point of the signal path, and that error indications can be provided to the outside of the circuit arrangement through the data output (BUS).

2. A circuit arrangement as claimed in claim 1, characterized in that the test-signal generator (TG) includes a device (VL) for adjusting the phase of the test signal in relation to a system clock (T), and that the device (VL) is adjustable via the control input (BUS).

3. A circuit arrangement as claimed in claim 2, characterized in that the device (VL) for adjusting the phase is a switchable delay line.

4. A circuit arrangement as claimed in any one of claims 1 to 3, characterized in that two or more points of the signal path or two or more signal paths can be reached by the test-signal generator (TG) through selector switches (EMUX), and that two or more points of the signal path or two or more signal paths are accessible to the error-detection circuit (PE).

5. Use of the circuit arrangement claimed in any one of claims 1 to 4 in a communications network comprising a plurality of devices (B11...B34) which are interconnected by selectable signal paths or serve to establish such signal paths, wherein at least some of the devices (B11...B34) are designed as circuit arrangements as set forth in any one of claims 1 to 4, and wherein a controller (ST) is provided which is connected to said devices (B11...B34) by control lines.

6. A method of testing a communications network wherein at least some of the devices (B11...B34) are designed as circuit arrangements as claimed in any one of claims 1 to 4, and which comprises a controller (ST) connected to said devices (B11...B34) by control lines,
**characterized in** that a signal path to be tested is set up from a first device (B11...B14) designed as a circuit arrangement as set forth in any one of claims 1 to 4 to a second device (B31...B34) designed as a circuit arrangement as claimed in any one of claims 1 to 4, that the test-signal generator (TG) of the first device (B11...B14) is caused to inject a test signal into said signal path, and that the error-detection circuit (PE) of the second device (B31...B34) is caused to check the signal on said signal path.

**Revendications**

1. Montage de circuit comportant une entrée du signal (E1...E16), une sortie du signal (A1...A16) et un chemin du signal, depuis l'entrée du signal (E1...E16) jusqu'à la sortie du signal (A1...A16) pour un signal courant, comportant un commutateur (EMUX) qui permet de couper le chemin du signal et d'envoyer, dans la suite du chemin, un signal de test (TS) au lieu du signal courant, comportant aussi une entrée de commande (BUS) pour entrer, de l'extérieur du montage de circuit, des données de commande pour la commande du convertisseur (EMUX), ainsi qu'une sortie de données (BUS) pour envoyer des paramètres d'exploitation vers l'extérieur du montage de circuit,
montage de circuit caractérisé par le fait qu'il y a un générateur (TG) de signal de test pour envoyer le signal de test (TS) par l'intermédiaire du convertisseur (EMUX), par le fait que le signal de test (TS) produit par le générateur (TG) de signal de test se caractérise par les mêmes propriétés caractéristiques que le signal courant, par le fait qu'il y a un circuit (PE) de reconnaissance d'erreur avec lequel un signal de test (TS) permet de vérifier s'il y a des erreurs de transmission, par le fait qu'en un endroit au moins du chemin du signal, le signal est accessible pour vérification et par le fait qu'il est possible d'envoyer des annonces d'erreur vers l'extérieur du montage de circuit par l'intermédiaire de la sortie de données (BUS).

2. Montage de circuit selon la revendication 1, caractérisé par le fait que le générateur (TG) du signal de test contient un dispositif (VI) pour pouvoir régler la phase du signal de test par rapport à un signal d'horloge (T) du système, et par le fait que le dispositif (VI) peut être réglé par l'intermédiaire de l'entrée de commande (BUS).

3. Montage de circuit selon la revendication 2, caractérisé par le fait que le dispositif (VI) prévu pour le réglage de la phase est un circuit de temporisation commutable.

4. Montage de circuit selon l'une des revendications 1 à 3, caractérisé par le fait qu'au moyen du commutateur (EMUX) le générateur (TG) du signal de test peut atteindre plusieurs endroits du chemin du signal ou plusieurs chemins du signal et par le fait que plusieurs endroits du chemin du signal ou plusieurs chemins du signal sont accessibles au circuit (PE) de reconnaissance d'erreur.

5. Emploi du montage de circuit selon l'une des revendications 1 à 4, dans un réseau de communication comportant une pluralité de dispositifs (B11...B34), qui sont reliés l'un à l'autre par des chemins du signal que l'on peut sélectionner ou qui servent à réaliser de tels chemins du signal, réseau dans lequel au moins quelques-uns des dispositifs (B11...B34) sont conçus sous forme de montages de circuit selon l'une des revendications 1 à 4 et dans lequel il y a un dispositif de commande (ST) qui est relié avec ce dispositif (B11...B34) par l'intermédiaire de conducteurs de commande.

6.  Procédé de vérification d'un réseau de communication dans lequel au moins quelques-uns des dispositifs (B11...B34) sont conçus sous forme de montages de circuit selon l'une des revendications 1 à 4 et dans lequel il y a un dispositif de commande (ST) qui est relié avec ce dispositif (B11...B34) par l'intermédiaire de conducteurs de commande, procédé caractérisé par le fait que, depuis un premier dispositif (B11...B14), qui est conçu sous forme de montage de circuit selon l'une des revendications 1 à 4, un chemin de signal à tester est relié à un second dispositif (B31...B34) qui est conçu sous forme de montage de circuit selon l'une des revendications 1 à 4, par le fait que le générateur (TG) du signal de test du premier dispositif (B11...B14) reçoit instruction d'envoyer un signal de test sur ce chemin du signal et par le fait que le circuit (PE) de reconnaissance d'erreur du second dispositif (B31...B34) reçoit instruction de vérifier si le signal se trouve sur ce chemin du signal.

FIG.1

FIG.3

FIG.2

EP 0 265 837 B1